# EUROPEAN PATENT APPLICATION

(11) **EP 4 693 670 A1**
(43) Date of publication of application: **11.02.2026**
(21) Application number: 24796333.3
(22) Date of filing: 28.04.2024
(51) Int. Cl.: H01M 50/30, H01M 50/289

(54) **CASE ASSEMBLY FOR BATTERY PACK, AND BATTERY PACK**

(30) Priority: 27.04.2023 CN 202320992786 U
(71) Applicant: SVOLT Energy Technology Co., Ltd., Changzhou, Jiangsu 213200 (CN)
(72) Inventor: LIU, Jiangxin, hangzhou, Jiangsu 213200 (CN); LI, Haiting, hangzhou, Jiangsu 213200 (CN)
(74) Representative: Michalski Hüttermann & Partner Patentanwälte mbB
(86) International application number: PCT/CN2024/090445
(87) International publication number: WO 2024/222964

(57) **Abstract**

A housing assembly of a battery pack and a battery pack (1000), wherein the housing assembly of the battery pack comprises: a housing (10) having an exhaust port, wherein the housing (10) has a battery chamber (102) and a first chamber (101) spaced apart in a horizontal direction, and an exhaust channel (104) extending along a first direction in a horizontal plane is formed at a bottom of the housing (10);an isolation plate (20) horizontally disposed at a bottom of the first chamber (101), wherein the isolation plate (20) is configured to cooperate with the housing (10) to define an exhaust cavity (103) located on a lower side of the isolation plate (20), the exhaust channel (104) communicates with the exhaust cavity (103), and the exhaust cavity (103) communicates with an external space through the exhaust port.

## Description

### Cross-Reference to Related Applications

This application is based on and claims priority to Chinese Patent Application No. 202320992786.4, filed on April 27, 2023, the entire contents of which are incorporated herein by reference.

### Technical Field

The present application relates to the field of new energy technology, particularly to a housing assembly of a battery pack and a battery pack.

### Background

With the rapid rise of new energy vehicles, vehicle products are gradually developing towards low-carbon, electric, and intelligent directions. In a new energy vehicle, a power battery is the source of the power, playing an extremely important role in vehicle range and performance. During use, the power battery generates heat due to internal resistance during charging and discharging and chemical reactions, leading to increased temperature of the battery cell. Therefore, ensuring an appropriate working temperature range to guarantee the service life of the power battery is an indispensable part of producing and manufacturing of the power battery. Meanwhile, safety requirements for the power battery are becoming increasingly stringent, requiring that when thermal runaway occurs, a battery pack should not catch fire within a certain time and provide a certain escape time. In related art, when thermal runaway occurs in a battery pack, high-temperature gases easily flow within the battery pack and reach locations of components such as battery terminals and bus bars, thus presenting a high risk of short circuits and sparking, resulting in poor safety performance when thermal runaway occurs.

### Summary

The present application is made based on the following facts and problems discovered by the inventors of the present application:
When thermal runaway is occurred at a battery cell, the battery cell releases a large amount of heat in a short time, and the generated heat quickly transfers to adjacent battery cells, causing thermal runaway to spread. High-temperature gases flowing within a battery pack easily enter between batteries and flow to locations of components such as battery terminals and bus bars, thereby causing risks of short circuits and sparking, resulting in poor safety of the battery pack.

The present application aims to solve at least one of the above technical problems in the prior art to some extent.

In view of this, the present application needs to provide a housing assembly of a battery pack and a battery pack, wherein the housing assembly can enable stable and reliable discharge of high-temperature gases generated during thermal runaway of the battery pack and prevent high-temperature gases from easily entering between batteries in the battery pack and locations of components such as battery terminals and bus bars, reducing the risk of short circuits and sparking occurred at the battery pack during thermal runaway, making the battery pack have better safety performance when thermal runaway occurs.

The present application also provides a battery pack having the above housing assembly.

According to the housing assembly of the battery pack provided by the present application, comprising: a housing having an exhaust port, wherein the housing has a battery chamber and a first chamber spaced apart in a horizontal direction, and an exhaust channel extending along a first direction in a horizontal plane is formed at a bottom of the housing; an isolation plate horizontally disposed at a bottom of the first chamber, wherein the isolation plate is configured to cooperate with the housing to define an exhaust cavity located on a lower side of the isolation plate, the exhaust channel communicates with the exhaust cavity, and the exhaust cavity communicates with an external space through the exhaust port.

According to the housing assembly of the battery pack of the present application, by providing the exhaust channel at the bottom of the battery chamber and the exhaust cavity at the bottom of the first chamber in the housing, with the battery chamber and the first chamber spaced apart in the horizontal direction, and the exhaust channel communicating with the exhaust cavity in the first direction, the battery pack achieves excellent safety performance when thermal runaway occurs.

Additionally, the battery module according to the above embodiments of the present application may have the following additional technical features:
According to an example of the present application, the housing comprises a frame and a bottom plate, wherein an inner side of the frame defines a cavity opened at both top and bottom, the bottom plate is configured to cap and cover a bottom of the frame, and the exhaust channel and the exhaust cavity are both formed on an upper side of the bottom plate.

According to an example of the present application, the housing assembly further comprises: a channel plate fixed on the bottom plate, wherein the channel plate extends along the first direction, a cross section of the channel plate perpendicular to the first direction has a U shape with an upward opening, and an inner side of the channel plate defines the exhaust channel.

According to an example of the present application, the channel plate comprises two channel side plates arranged opposite to each other in a second direction, and the housing assembly further comprises: elastic support strips, wherein the elastic support strips extend along the first direction, the elastic support strips are two in number, and the two elastic support strips are respectively fixed to the two channel side plates and abut between the channel plate and a battery cell in an up-down direction.

According to an example of the present application, the housing assembly further comprises: an insulation sheet adapted to be fixed to a lower surface of the battery cell, wherein the insulation sheet is configured to cap and cover an upper side of the channel plate, and the insulation sheet is configured to cooperate with the channel plate to define the exhaust channel.

According to an example of the present application, the insulation sheet has a pressure relief area vertically aligned with a first pressure relief valve of the battery cell, the pressure relief area has a thickness of 0.1mm-0.2mm, and areas of the insulation sheet other than the pressure relief area have a thickness of 0.5mm-1mm.

According to an example of the present application, the exhaust port is located on an upper side of the isolation plate, and a ventilation hole communicating with the exhaust cavity is formed on the isolation plate, the housing assembly further comprises: a flow guide cover disposed on the upper side of the isolation plate and connected to the housing and the isolation plate, wherein the flow guide cover is configured to cooperate with the housing and the isolation plate to define a flow guide channel communicating between the ventilation hole and the exhaust port.

According to an example of the present application, the flow guide cover extends in an up-down direction, and a cross section of the flow guide cover in a horizontal plane has a U shape with an opening toward a side wall of the housing.

According to an example of the present application, a second pressure relief valve is provided at the exhaust port. The battery pack provided by the present application comprises: a housing having an accommodation cavity formed therein;
a battery module disposed in the accommodation cavity and constructed as the battery module according to any one of the above embodiments.

According to the battery pack of the present application comprises multiple battery cells and the above housing assembly of the battery pack, wherein the multiple battery cells are disposed in the housing and arranged in a stacked manner along the first direction.

According to the battery pack of the present application, by providing the above housing assembly of the battery pack, with an exhaust channel at the bottom of the battery chamber and an exhaust cavity at the bottom of the first chamber in the housing, the battery chamber and the first chamber spaced apart in a horizontal direction, and the exhaust channel communicating with the exhaust cavity in the first direction, the battery pack achieves excellent safety performance when thermal runaway occurs.

Additional aspects and advantages of the present application will be partly given in the following description, partly will become apparent from the following description, or will be learned through the practice of the present application.

### Brief Description of the Drawings

FIG. 1 is a schematic view of a battery pack according to an embodiment of the present application;
FIG. 2 is a schematic view of the battery pack according to the embodiment of the present application when viewed from another perspective;
FIG. 3 is a schematic view of the housing assembly shown in FIG. 1;
FIG. 4 is a schematic view of the housing assembly shown in FIG. 1 when viewed from another perspective;
FIG. 5 is a schematic view of the housing assembly shown in FIG. 1 when viewed from yet another perspective;
FIG. 6 is a schematic view of a channel plate, elastic support strips and an insulation sheet shown in FIG. 5;
FIG. 7 is a schematic view of the insulation sheet shown in FIG. 6;
FIG. 8 is a sectional view of the housing assembly shown in FIG. 3;
FIG. 9 is a schematic view of the flow guide cover shown in FIG. 8.

### Reference Signs:

10, housing; 11, frame; 12, bottom plate; 13, partition beam; 20, isolation plate; 21, ventilation hole; 30, channel plate; 31, channel side plate; 40, insulation sheet; 41, pressure relief area; 50, elastic support strip; 60, flow guide cover; 70, second pressure relief valve (or explosion-proof valve); 100, housing assembly; 101, first chamber; 102, battery chamber; 103, exhaust cavity; 104, exhaust channel; 200, battery cell; 1000, battery pack.

### Detailed Description

The embodiments of the present application will be described in detail below, where examples of the embodiments are shown in the accompanying drawings, in which the same or similar numerals throughout indicate the same or similar elements or elements having the same or similar functions. The embodiments described below with reference to the accompanying drawings are exemplary and are intended to explain the present application and should not be construed as limiting the present application.

The disclosure below provides many different embodiments or examples for implementing different structures of the present application. To simplify the disclosure of the present application, specific components and settings of particular examples are described below. Of course, they are merely examples and are not intended to limit the present application. In addition, reference numerals and/or letters may be repeated in different examples in the present application. Such repetition is for the purpose of simplification and clarity and does not in itself indicate the relationship between various embodiments and/or settings discussed. Furthermore, the present application provides examples of various specific processes and materials, but those skilled in the art will recognize that other processes may be applicable and/or other materials may be used.

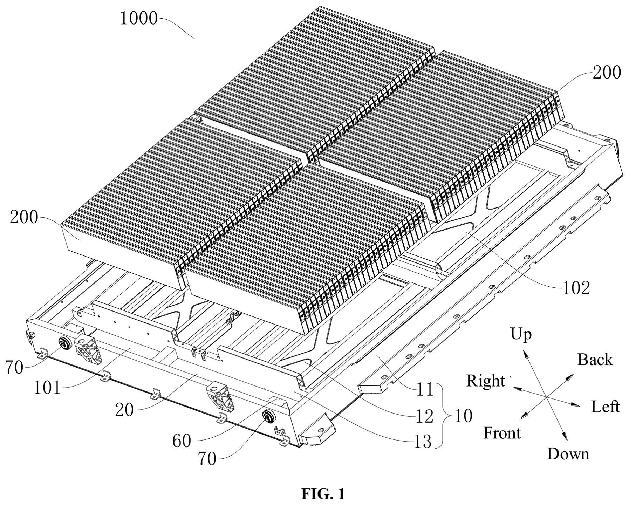

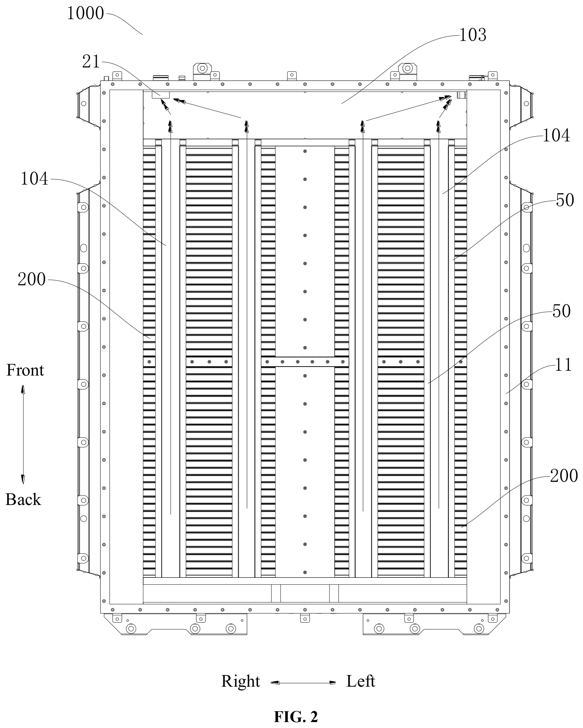

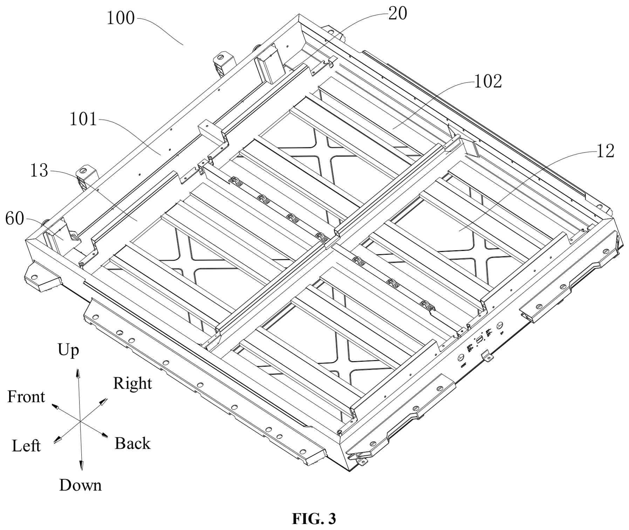

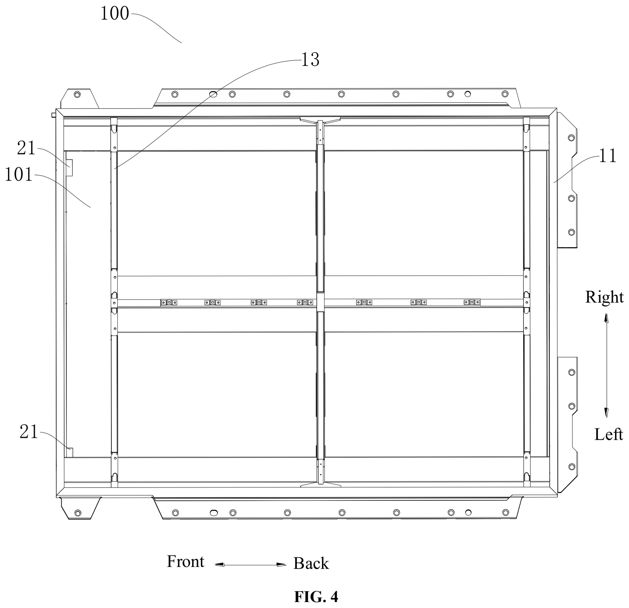

First, referring to FIGS. 1-9, a brief description of the battery pack 1000 according to the second aspect embodiment of the present application is provided. The battery pack 1000 includes multiple battery cells 200 and the housing assembly 100 of the battery pack 1000 according to the embodiment of the first aspect of the present application. The multiple battery cells 200 are arranged in groups within the housing assembly 100, the battery cell 200 is provided with a first pressure relief valve oriented toward the bottom of the battery pack 1000.

The housing assembly 100 of the battery pack 1000 according to the embodiment of the first aspect of the present application will now be described with reference to FIGS.1-9.

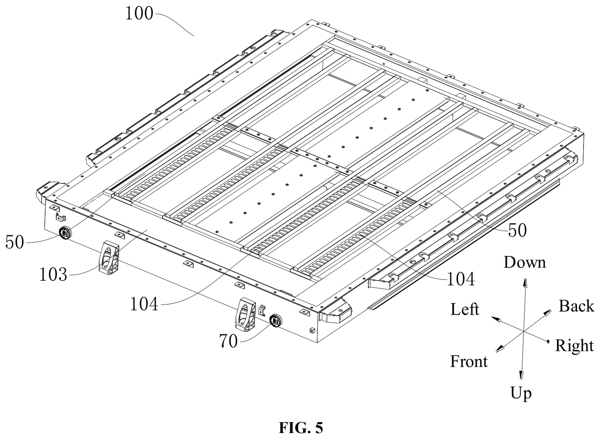

As shown in FIGS. 1-9, the housing assembly 100 of the battery pack 1000 according to the embodiment of the first aspect of the present application includes: a housing 10 and an isolation plate 20. The housing 10 has an exhaust port, the housing 10 has a battery chamber 102 and a first chamber 101 spaced apart in a horizontal direction, and an exhaust channel 104 extending along a first direction (front-back direction as shown in FIG. 5) in a horizontal plane is formed at a bottom of the housing 10; the isolation plate 20 is horizontally disposed at the bottom of the first chamber 101, the isolation plate 20 is configured to cooperate with the housing 10 to define an exhaust cavity 103 located below the isolation plate 20 (in the up-down direction as shown in FIG. 5), the exhaust channel 104 communicates with the exhaust cavity 103, and the exhaust cavity 103 communicates with an external space through the exhaust port.

In the housing assembly 100 of the battery pack 1000 of this embodiment, the battery chamber 102 and the first chamber 101 are provided within the housing 10. The battery chamber 102 facilitates the installation and arrangement of multiple battery cells 200 within the housing 10, while the first chamber 101 facilitates the installation and arrangement of electrical equipment in the battery pack 1000. Meanwhile, the arrangement of the battery chamber 102 and the first chamber 101 ensures that when thermal runaway occurs in the battery pack 1000, the electrical equipment can still remain in a relatively independent and safe environment, thereby improving the safety of the battery pack 1000 to some extent.

In the housing assembly 100 of the battery pack 1000 of this embodiment, the exhaust channel 104 extending along the first direction in a horizontal plane is formed at the bottom of the housing 10, and the isolation plate 20 is configured to cooperate with the housing 10 at the bottom of the first chamber 101 to define the exhaust cavity 103 located on a lower side of the isolation plate 20, that is, the exhaust cavity 103 is located in a lower side of the first chamber 101. Since the exhaust channel 104 communicates with the exhaust cavity 103, and the exhaust cavity 103 communicates with the external space through the exhaust port, the opening of the exhaust channel 104 on one side in the first direction can communicate with the exhaust cavity 103, and the exhaust channel 104 is located at the bottom of the battery chamber 102. Thus, when thermal runaway occurs in the battery pack 1000, high-temperature gases are ejected from the first pressure relief valve of the battery cell 200 into the exhaust channel 104 at the bottom of the housing 10, then the high-temperature gases can flow along the exhaust channel 104 in the first direction and converge into the exhaust cavity 103, and finally, the high-temperature gases flow out from the exhaust cavity 103 through the exhaust port to the outside of the battery pack 1000, thereby completing the discharge of high-temperature gases.

It can be understood that in this embodiment, the exhaust channel 104 and exhaust cavity 103 are arranged at the bottom of the housing 10, and the first pressure relief valves of multiple battery cells 200 in the battery pack 1000 are arranged toward the exhaust channel 104 at the bottom of the housing 10. This arrangement allows electrical structures such as bus bars in the battery pack 1000 and battery terminals of the battery cells 200 to be arranged on the upper side of the battery chamber 102, thereby achieving an isolation effect between the electrical structures such as bus bars and battery terminals of the battery cells 200 and the high-temperature gases generated during thermal runaway of the battery pack 1000. This greatly increases the difficulty for high-temperature gases to flow to the electrical structures during thermal runaway of the battery pack 1000, significantly reducing the risk of short circuits and sparking in the battery pack 1000, thus greatly improving the safety of the battery pack 1000.

In this embodiment of the housing assembly 100 of the battery pack 1000, the exhaust channel 104 is located at the bottom of the battery chamber 102, and the exhaust cavity 103 is located at the bottom of the first chamber 101. Thus, the exhaust cavity 103 is positioned on one side of the exhaust channel 104 in the first direction, so that the multiple battery cells 200 in the battery chamber 102 only have positional relationship of surface contact with the exhaust channel 104, while the exhaust cavity 103 does not contact the multiple battery cells 200. Therefore, when thermal runaway occurs in the battery pack 1000, after high-temperature gases flow from the first pressure relief valve of the battery cell 200 to the exhaust channel 104, the high-temperature gases flow at the bottom of the battery chamber 102, and the high-temperature gases only flow along the exhaust channel 104 on one side of the first pressure relief valves of multiple battery cells 200. This provides better control of thermal diffusion between adjacent battery cells 200, and simultaneously, the high-temperature gases accumulated in the exhaust cavity 103 are located away from the battery chamber 102, thereby significantly reducing the impact of high-temperature gases on the battery cells 200 and electrical structures such as bus bars at the battery cells 200 and battery terminals of the battery cells 200 during the exhaust process when thermal runaway occurs in the battery pack 1000, greatly improving the safety performance of the battery pack 1000 during thermal runaway.

In the housing assembly 100 of the battery pack 1000 of this embodiment, when thermal runaway occurs in the battery pack 1000, high-temperature gases flow from the exhaust channel 104 to the exhaust cavity 103 and discharge through the exhaust port from the exhaust cavity 103. During the exhaust process, since the exhaust channel 104 is arranged at the bottom of the battery chamber 102 and the exhaust cavity 103 is arranged at the bottom of the first chamber 101, the high-temperature gases consistently maintain flow at the bottom of the housing 10 and remain in a relatively enclosed flow structure isolated from the first chamber 101 containing electrical components and the battery chamber 102 containing multiple battery cells 200 and electrical structures such as bus bars. This greatly reduces the ability of high-temperature gases to flow into electrical components, between battery cells 200 and into structural components such as bus bars, thereby achieving good improvement in the safety performance of the battery pack 1000 when thermal runaway occurs.

According to the housing assembly 100 of the battery pack 1000 of the embodiment of the present application, by providing the exhaust channel 104 at the bottom of the battery chamber 102 and the exhaust cavity 103 at the bottom of the first chamber 101 in the housing 10, with the battery chamber 102 and the first chamber 101 spaced apart in a horizontal direction, and the exhaust channel 104 communicating with the exhaust cavity 103 in the first direction, the battery pack 1000 achieves excellent safety performance when thermal runaway occurs.

In some embodiments of the present application, as shown in FIG. 1, the housing 10 may include: a partition beam 13 disposed within the housing 10, and the partition beam 13 divides the internal space of the housing 10 into the battery chamber 102 and the first chamber 101. Thus, by dividing the internal space of the housing 10 into the battery chamber 102 and the first chamber 101 through the partition beam 13, the structure is simple, the partition and isolation effect is good, and the partition beam 13 has excellent structural strength, making the structures of the battery chamber 102 and the first chamber 101 more stable and reliable, thereby ensuring more secure and safe installation and fixation of components assembled in the battery chamber 102 and the first chamber 101.

In some embodiments of the present application, as shown in FIG. 1, the housing 10 may also include a frame 11 and a bottom plate 12, an inner side of the frame 11 defines a cavity opened at both top and bottom, the bottom plate 12 is configured to cap and cover the bottom of the frame 11, and the exhaust channel 104 and the exhaust cavity 103 are both formed on the upper side of the bottom plate 12. Thus, the housing 10 is provided with the frame 11 and bottom plate 12, with the bottom plate 12 covering the bottom of the frame 11, and the inner side of the frame 11 defines a cavity opened at the top, resulting in a simple structure that facilitates the assembly of various components of the battery pack 1000 within the housing 10. Forming both the exhaust channel 104 and the exhaust cavity 103 on the upper side of the bottom plate 12 allows the bottom plate 12 to provide good sealing effect to some extent for the high-temperature gases in the exhaust channel 104 and exhaust cavity 103, enabling stable flow of high-temperature gases within the exhaust channel 104 and exhaust cavity 103.

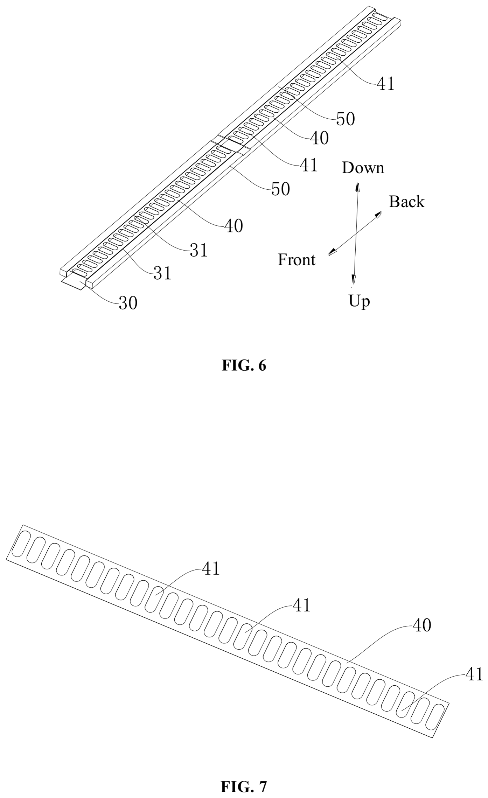

In an embodiment of the present application, as shown in FIGS. 5 and 6, the housing assembly 100 may further include: a channel plate 30 fixed on the bottom plate 12, the channel plate 30 extends along the first direction, a cross section of the channel plate 30 perpendicular to the first direction has a U shape with an upward opening, and an inner side of the channel plate 30 defines the exhaust channel 104. Thus, providing cross section of the channel plate 30 to have a U shape which is opened upward allows the channel plate 30 to be conveniently and firmly fixed on the bottom plate 12 and forms a reliable exhaust channel 104, featuring a simple structure that facilitates the arrangement of the exhaust channel 104. Specifically, the channel plate 30 is a mica plate.

In some examples of the present application, referring to FIGS. 5 and 6, the channel plate 30 may include two channel side plates 31 arranged opposite to each other in a second direction. The housing assembly 100 further includes: elastic support strips 50, wherein the elastic support strips 50 extend along the first direction, the elastic support strips 50 are two in number, and the two elastic support strips 50 are respectively fixed to the two channel side plates 31 and abut between the channel plate 30 and the battery cell 200 in the up-down direction. Thus, the two channel side plates 31 of the channel plate 30 and the elastic support strips 50 can provide good support and fixation for the battery cell 200, while the two elastic support strips 50 can provide certain buffering and energy absorption effects for the battery cell 200, thereby providing good protection for the battery cell 200 in the battery pack 1000. The two elastic support strips 50 can also provide auxiliary support and positioning cooperation for the two channel side plates 31 of the channel plate 30, making it more convenient to fix the channel plate 30 on the bottom plate 12.

In some examples of the present application, as shown in FIGS. 5 and 6, the housing assembly 100 may further include: an insulation sheet 40 adapted to be fixed to a lower surface of the battery cell 200, the insulation sheet 40 is configured to cap and cover the upper side of the channel plate 30, and the insulation sheet 40 is configured to cooperate with the channel plate 30 to define the exhaust channel 104. Thus, with the insulation sheet 40 fixed to the lower surface of the battery cell 200 and cooperating with the channel plate 30 to define the exhaust channel 104, when high-temperature gases enter the exhaust channel 104 in the case where thermal runaway occurs in the battery pack 1000, the insulation sheet 40 can effectively prevent the flow of high-temperature gas from returning to the battery chamber 102, thereby reducing the risk of short circuits and fire caused by high-temperature gases, making the battery pack 1000 safer. Specifically, the insulation sheet 40 is fixed to the battery cell 200 through double-sided adhesive tape. Specifically, the insulation sheet 40 is made of mica paper.

In an example of the present application, referring to FIGS. 5 and 6, the insulation sheet 40 may have a pressure relief area 41 vertically aligned with the first pressure relief valve of the battery cell 200, the pressure relief area 41 has a thickness of 0.1mm-0.2mm, and areas of the insulation sheet 40 other than the pressure relief area 41 have a thickness of 0.5mm-1mm. Thus, limiting the thickness of the pressure relief area 41 of the insulation sheet 40 between 0.1mm-0.2mm allows high-temperature gases to more easily break through the pressure relief area 41 of the insulation sheet 40 and enter the exhaust channel 104 when the first pressure relief valve erupts, while ensuring that the pressure relief area 41 of the insulation sheet 40 provides good isolation for high-temperature gases within the exhaust channel 104.

Limiting the thickness of areas of the insulation sheet 40 other than the pressure relief area 41 between 0.5mm-1mm allows the insulation sheet 40 to have sufficient thickness to isolate high-temperature gases within the exhaust channel 104, while ensuring that the insulation sheet 40 maintains a relatively smooth cooperation with the channel plate 30 and elastic support strips 50 in the horizontal plane during installation and arrangement of the insulation sheet 40, allowing the battery cell 200 to be securely fixed on the elastic support strips. For example, the thickness of the pressure relief area 41 may be 0.1mm, 0.15mm, or 0.2mm, etc., and the thickness of areas of the insulation sheet 40 other than the pressure relief area 41 may be 0.5mm, 0.6mm, 0.7mm, 0.8mm, 0.9mm, or 1mm, etc. Preferably, the thickness of the pressure relief area 41 of the insulation sheet 40 is 0.1mm, and the thickness of areas of the insulation sheet 40 other than the pressure relief area 41 is 0.5mm.

In some embodiments of the present application, referring to FIGS. 1 and 5, the exhaust port may be located on the upper side of the isolation plate 20, a ventilation hole 21 communicating with the exhaust cavity 103 is formed on the isolation plate 20. The housing assembly 100 further includes: a flow guide cover 60 disposed on the upper side of the isolation plate 20 and connected to the housing 10 and the isolation plate 20, the flow guide cover 60 is configured to cooperate with the housing 10 and the isolation plate 20 to define a flow guide channel communicating between the ventilation hole 21 and the exhaust port. Specifically, the exhaust port is formed on the side wall of the first chamber 101, and the flow guide cover 60 is located within the first chamber 101.

It can be understood that the exhaust cavity 103 is located at the bottom of the first chamber 101, and in the first direction, the exhaust cavity 103 has a relatively small cavity structure. By arranging the exhaust port on the side wall of the first chamber 101 and forming the ventilation hole 21 on the isolation plate 20 to communicate with the exhaust cavity 103, and providing the flow guide cover 60 between the exhaust port and the ventilation hole 21 to form a flow guide channel, the exhaust cavity 103 can have a larger exhaust flow area, allowing high-temperature gases accumulated in the exhaust cavity 103 to flow out quickly from the ventilation hole 21 along the flow guide channel through the exhaust port to the outside of the battery pack 1000, enabling stable and rapid discharge of high-temperature gases when thermal runaway occurs in the battery pack 1000, providing better exhaust effect and thus better safety for the battery pack 1000.

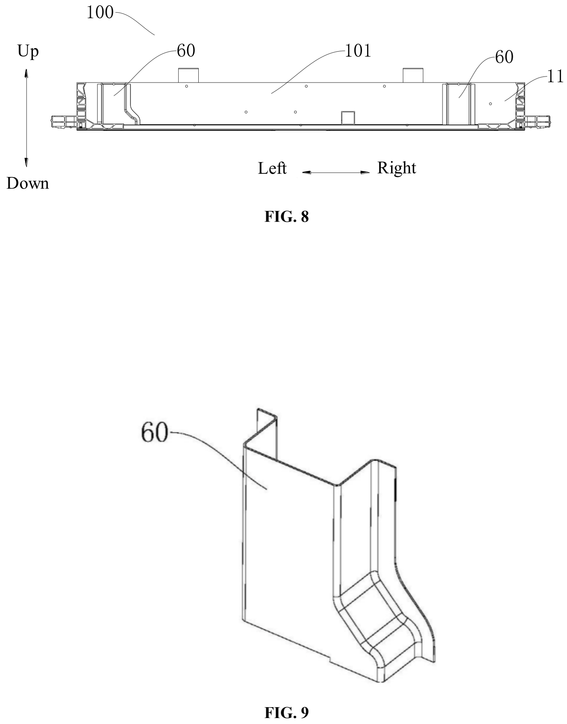

In an embodiment of the present application, as shown in FIG. 8, the flow guide cover may extend in an up-down direction, and a cross section of the flow guide cover in a horizontal plane has a U shape with an opening toward a side wall of the housing 10. Thus, the flow guide cover cooperates with the side wall of the housing 10 to form the flow guide channel, featuring a simple structure with good flow guidance and sealing effects, enabling more stable and reliable discharge of high-temperature gases.

In some embodiments of the present application, as shown in FIG. 5, a second pressure relief valve 70 may be provided at the exhaust port. Thus, providing the second pressure relief valve 70 at the exhaust port can provide good sealing for the exhaust cavity 103, while facilitating that high-temperature gases flowing to the flow guide channel can be ejected from the exhaust port when thermal runaway occurs in the battery pack 1000.

Now referring to FIGS. 1-9, the battery pack 1000 according to the embodiment of the second aspect of the present application will be described.

As shown in FIGS. 1-9, the battery pack 1000 according to the embodiment of the present application includes multiple battery cells 200 and the housing assembly 100 of the battery pack 1000 according to the embodiment of the first aspect of the present application, and the multiple battery cells 200 are disposed within the housing 10 and arranged in a stacked manner along the first direction.

Other configurations and operations of the battery pack 1000 according to the embodiment of the present application are known to those skilled in the art and will not be described in detail here.

In the battery pack 1000 according to the embodiment of the present application, by providing the housing assembly 100 of the battery pack 1000 of the above embodiment of the first aspect, with the exhaust channel 104 at the bottom of the battery chamber 102 and the exhaust cavity 103 at the bottom of the first chamber 101 in the housing 10, the battery chamber 102 and the first chamber 101 spaced apart in a horizontal direction, and the exhaust channel 104 communicating with the exhaust cavity 103 in the first direction, achieves excellent safety performance when thermal runaway occurs at the battery pack 1000.

Now referring to FIGS. 1-9, a specific embodiment of the battery pack 1000 according to the present application will be described.

As shown in FIGS. 1-9, the battery pack 1000 includes multiple battery cells 200 and the housing assembly 100, the multiple battery cells 200 are disposed within the housing 10 and arranged in a stacked manner along the first direction.

The housing assembly 100 includes a housing 10, an isolation plate 20, a channel plate 30, elastic support strips 50, an insulation sheet 40, a flow guide cover 60, and a second pressure relief valve 70. The housing 10 includes a frame 11, a bottom plate 12, and a partition beam 13, the bottom plate 12 is configured to cap and cover the bottom of the frame 11, the partition beam 13 is located on the inner side of the frame 11 and divides the inner space of the housing 10 into a first chamber 101 and a battery chamber 102, the isolation plate 20 is disposed at the bottom of the first chamber 101, and the isolation plate 20 is configured to cooperate with the bottom plate 12, the frame 11, and the partition beam 13 to define an exhaust cavity 103; the channel plate 30 extends along the first direction and is disposed at the bottom of the battery chamber 102 and fixed to the bottom plate 12, a cross section of the channel plate 30 perpendicular to the first direction has a U shape with an upward opening, the channel plate 30 includes two channel side plates 31, the insulation sheet 40 is configured to cap and cover the upper side of the channel plate 30, the elastic support strips 50 are located on the outer side of the channel side plates 31 and fixed to the channel side plates 31, and the elastic support members abut against the bottom plate 12 and the battery cells 200; the insulation sheet 40 has a pressure relief area 41, which is vertically aligned with the first pressure relief valve of the battery cell 200; in the first direction, the flow guide channel communicates with the exhaust cavity 103, the isolation plate 20 is provided with a ventilation hole 21, the side wall of the first chamber 101 in the first direction is provided with an exhaust port, the flow guide cover 60 is provided within the first chamber 101 and communicated between the ventilation hole 21 and the exhaust port to form a flow guide channel, and the second pressure relief valve is provided at the exhaust port.

According to the housing assembly 100 of the battery pack 1000 of the embodiment of the present application, by providing the exhaust channel 104 at the bottom of the battery chamber 102 and the exhaust cavity 103 at the bottom of the first chamber 101 in the housing 10, with the battery chamber 102 and the first chamber 101 spaced apart in a horizontal direction, and the exhaust channel 104 communicating with the exhaust cavity 103 in the first direction, the battery pack 1000 achieves excellent safety performance when thermal runaway occurs at the battery pack 1000.

In the description of the present application, it should be understood that directional or positional relationships indicated by the terms such as "center", "up", "down", "vertical", "horizontal", "top", "bottom", "inner", "outer", "axial", "radial", "circumferential" are based on the directional or positional relationships shown in the drawings, which are merely for the convenience of describing the present application and simplifying the description, and do not indicate or imply that the referred device or element must have a specific orientation, be constructed and operated in a specific orientation. Therefore, they should not be construed as limitations on the present application.

Furthermore, the terms "first", "second" are used merely for descriptive purposes and should not be construed as indicating or implying relative importance or implicitly indicating the number of technical features referred to. Thus, features defined as "first", "second" may explicitly or implicitly include one or more of these features. In the description of the present application, "multiple" means two or more, unless explicitly specified otherwise.

In the present application, unless otherwise explicitly specified and limited, terms such as "installation", "connection", "connecting", "fixing" should be understood broadly. For example, they may refer to fixed connection, detachable connection, or integral formation; direct connection or indirect connection through intermediate media; internal communication between two elements or interaction relationship between two elements. Those skilled in the art can understand the specific meanings of these terms in the present application according to specific situations.

In the present application, unless otherwise explicitly specified and limited, a first feature "on" or "under" a second feature may mean that the first and second features are in direct contact, or the first and second features are in indirect contact through an intermediate media. Moreover, the first feature "above", "over" and "on" the second feature may mean the first feature is directly above or obliquely above the second feature, or merely indicate that the level of the first feature is higher than that of the second feature. The first feature "below", "under" and "underneath" the second feature may mean the first feature is directly below or obliquely below the second feature, or merely indicate that the level of the first feature is lower than that of the second feature.

In the description of this specification, reference terms such as "an embodiment", "some embodiments", "example", "specific example", or "some examples" indicate that specific features, structures, materials, or characteristics described in connection with the embodiment or example are included in at least one embodiment or example of the present application. In this specification, the illustrative expressions of the above terms do not necessarily refer to the same embodiment or example. Moreover, the described specific features, structures, materials, or characteristics may be combined in any suitable manner in one or more embodiments or examples. Furthermore, under non-contradictory circumstances, those skilled in the art may combine different embodiments or examples and features of different embodiments or examples described in this specification.

Although embodiments of the present application have been shown and described, those skilled in the art can understand that: these embodiments can be varied, modified, replaced, and transformed in many ways without departing from the principles and essence of the present application, and the scope of the present application is limited by the claims and their equivalents.

## Claims

1. A housing assembly of a battery pack, comprising:
a housing having an exhaust port, wherein the housing has a battery chamber and a first chamber spaced apart in a horizontal direction, and an exhaust channel extending along a first direction in a horizontal plane is formed at a bottom of the housing;
an isolation plate horizontally disposed at a bottom of the first chamber, wherein the isolation plate is configured to cooperate with the housing to define an exhaust cavity located on a lower side of the isolation plate, the exhaust channel communicates with the exhaust cavity, and the exhaust cavity communicates with an external space through the exhaust port.

2. The housing assembly of the battery pack according to claim 1, wherein the housing comprises a frame and a bottom plate, an inner side of the frame defines a cavity opened at both top and bottom, the bottom plate is configured to cap and cover a bottom of the frame, and the exhaust channel and the exhaust cavity are both formed on an upper side of the bottom plate.

3. The housing assembly of the battery pack according to claim 2, further comprising: a channel plate fixed on the bottom plate, wherein the channel plate extends along the first direction, a cross section of the channel plate perpendicular to the first direction has a U shape with an upward opening, and an inner side of the channel plate defines the exhaust channel.

4. The housing assembly of the battery pack according to claim 3, wherein the channel plate comprises two channel side plates arranged opposite to each other in a second direction, and the housing assembly further comprises: elastic support strips, wherein the elastic support strips extend along the first direction, the elastic support strips are two in number, and the two elastic support strips are respectively fixed to the two channel side plates and abut between the channel plate and a battery cell in an up-down direction.

5. The housing assembly of the battery pack according to claim 3, further comprising: an insulation sheet adapted to be fixed to a lower surface of a battery cell, wherein the insulation sheet is configured to cap and cover an upper side of the channel plate, and the insulation sheet is configured to cooperate with the channel plate to define the exhaust channel.

6. The housing assembly of the battery pack according to claim 5, wherein the insulation sheet has a pressure relief area vertically aligned with a first pressure relief valve of the battery cell, the pressure relief area has a thickness of 0.1mm-0.2mm, and areas of the insulation sheet other than the pressure relief area have a thickness of 0.5mm-1mm.

7. The housing assembly of the battery pack according to any one of claims 1-6, wherein the exhaust port is located on an upper side of the isolation plate, and a ventilation hole communicating with the exhaust cavity is formed on the isolation plate, and
the housing assembly further comprises: a flow guide cover disposed on the upper side of the isolation plate and connected to the housing and the isolation plate, wherein the flow guide cover is configured to cooperate with the housing and the isolation plate to define a flow guide channel communicating between the ventilation hole and the exhaust port.

8. The housing assembly of the battery pack according to claim 7, wherein the flow guide cover extends in an up-down direction, and a cross section of the flow guide cover in a horizontal plane has a U shape with an opening toward a side wall of the housing.

9. The housing assembly of the battery pack according to claim 1, wherein a second pressure relief valve is provided at the exhaust port.

10. A battery pack, comprising multiple battery cells and the housing assembly of the battery pack according to any one of claims 1-9, wherein the multiple battery cells are disposed in the housing and arranged in a stacked manner along the first direction.
